# EUROPEAN PATENT APPLICATION

(11) **EP 1 371 521 A2**
(43) Date of publication of application: **17.12.2003**
(21) Application number: 03396057.6
(22) Date of filing: 13.06.2003
(51) Int. Cl.: B60P 3/41

(54) **Tensioning device**

(30) Priority: 14.06.2002 FI 20021157; 09.06.2003 FI 20030231 U
(71) Applicant: Ljung, Boris, 68820 Esse (FI)
(72) Inventor: Ljung, Boris, 68820 Esse (FI)
(74) Representative: Niemi, Hakan

(57) **Abstract**

The present invention relates to a tensioning device for securing load onto a carrier base. Such a tensioning device comprises a flexible tensioning means (1) to be arranged in a winch drum (2). The flexible tensioning means is arranged to be placed over the load and to be coupled to a locking device (4) on the opposite side of the carrier base, Thereafter the flexible tensioning means is arranged to be tightened against the load using a drive means (3) arranged in the winch drum (2). Such a drive means is double-acting to allow the winch drum to continuously rotate about a central axis (12) thereof. Hereby, the drive means is arranged to alternately drive release means (10, 11) included in the winch drum on the substantially opposite sides thereof. Such release means are arranged to co-operate with the winch drum when rotating in one direction only relative to the central axis (12) thereof, so that the direction concerned coincides with the release means on both sides of the winch drum.

## Description

### FIELD OF THE INVENTION

The present invention relates to a tensioning device according to the preamble of claim 1 for securing load on a carrier base. A preferred embodiment of the invention relates to securing logs during transportation thereof in timber wagons.

### BACKGROUND OF THE INVENTION

It is known in the art to secure for instance logs in timber wagons in various ways. The simplest method is to utilize what are known as load ropes, which are fastened to hooks in the timber wagons on opposite long sides thereof. Such load ropes are thereafter tightened manually with a specific stay tightener included in the load rope.

It is also known to secure the load by tightening the load ropes using manually operated winch drums arranged in specific timber girders or on the chassis of a loading vehicle according to publications US 3 848 889 or Fl 77 411, for example. Furthermore, solutions are also known in which a hydraulic cylinder exerts a constant tensional force directed on a load rope arranged around the load according to publication SE 405 578, for instance.

Finally, such mechanical tensioning devices can be mentioned in which a winch drum is arranged to collect the load rope is for instance operated with an air dome connected to the pneumatic system of the loading vehicle in accordance with publication SE 305 415.

The existing prior art nevertheless has several drawbacks and defects. Manual tensioning devices are for instance time-consuming and heavy to handle. The known mechanical tensioning devices are in turn apart from being very slow also very expensive to acquire. Such drawbacks have meant that the current tensioning devices have not gained ground largely.

Some of the known solutions, such as the tensioning device according to SE 405 578 are only able to tighten the load rope during transportation. In addition, here the load rope is tightened only for a distance that corresponds to the cylinder stroke of the piston included in the device. The solution cannot be utilized at all for hoisting the load rope during loading and unloading.

The prior art solutions also require regularly to specifically detach the load rope from the carrier base or the chassis of the vehicle when unloading the load, so that the load can thereafter be collected on the winch drum possibly included in the arrangement. Such work is considered as time-consuming and difficult when urgently unloading the load.

### BRIEF DESCRIPTION OF THE INVENTION

The present invention avoids several of the problems associated with prior art solutions since a tensioning device that is rapid to use and provided with a very simple structure has been designed.

This is achieved with a tensioning device according to the present invention provided with the characteristics presented in the claims. What is disclosed in the characterizing part of the first claim is particularly characteristic for an arrangement according to the present invention.

The invention is based upon the idea that tensioning load ropes rapidly requires the winch drum to be continuously operated where the load rope is collected. It should also be possible to detach the load rope from the locking device thereof without for instance the driver of the carrier vehicle having to leave the driver's cab when unloading the load.

What the term *"carrier"* refers to in the present invention is any road, rail, water or air vehicle, in which load of various types can be secured against a base. In this context, such a load-receiving base is referred to as a *"carrier base"* or *"cargo space".* The term may indicate a platform body of a motor vehicle or a timber bank, such as a loading palette of a vessel, a railway carriage or an aircraft.

The term *"load rope* " refers in the following to such flexible tensioning means, by which various types of load is secured to the base thereof. Consequently, the load rope includes a wire rope, a chain, a fibre rope or a hawser of some kind.

The terms "up", *"down", "above", "under"* and so on used in the specification refer to directions in relation to the tensioning device or the structural details thereof as shown in the attached figures.

The arrangement described in the present invention provides several considerable advantages over the prior art. Thus, the loading and unloading functions can be significantly simplified, and at the same time, the functions require considerably less time than previously. The time saved naturally reduces the costs of delivering goods. All this for a cost that despite the substantial advantages thereof becomes more advantageous than previous solutions.

A tensioning device according to the present invention is simple to mount on both new carriers as well as on carriers already in use. The tensioning device is also easy to join with structures already existing on the carrier since a tensioning device according to the present invention does not require a great deal of space. Thus, the tensioning device can be arranged in a girder provided for the purpose or in a timber girder known per se. The tensioning device can also easily be integrated into the other structures in a cargo space or into the frame structure of the carrier.

Additional advantages and details of the invention are disclosed in more detail in the specification below.

### BRIEF DESCRIPTION OF THE DRAWINGS

In the following, the present invention will be explained in greater detail by means of a preferred embodiment with reference to the accompanying drawing, in which
Figure 1 is a schematic side view partly in longitudinal section showing a tensioning device according to the present invention,

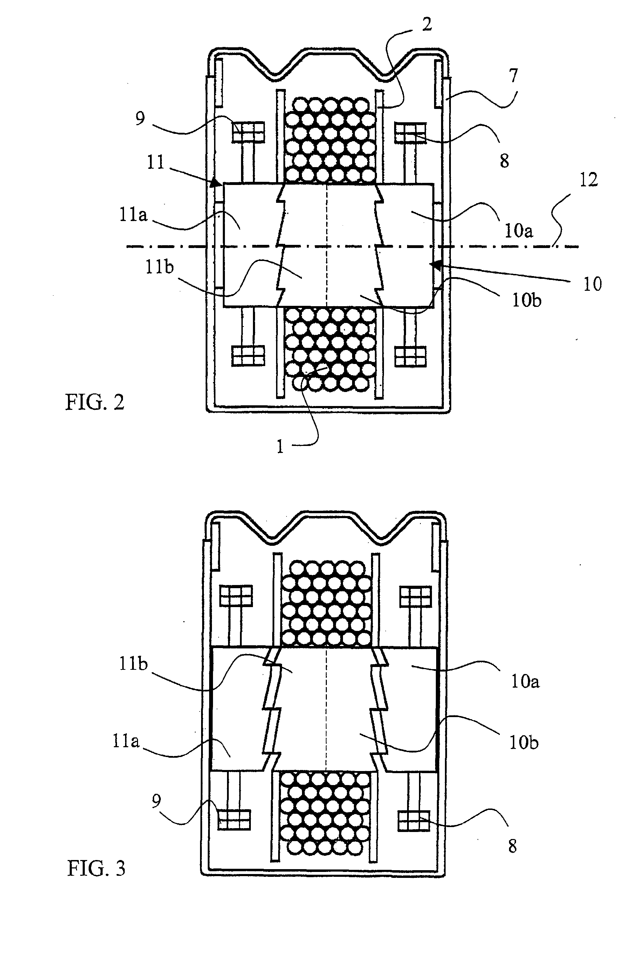

Figure 2 schematically shows in cross section a tensioning device according to Figure 1 along line A-A indicated in Figure 1, when ratchet wheels included in the winch drum thereof are co-operating,
Figure 3 schematically shows in cross section a tensioning device according to Figure 1 along line A-A indicated in Figure 1, when the ratchet wheels are released,
Figure 4 schematically shows in cross section a tensioning device according to Figure 1 along line B-B indicated in Figure 1,
Figure 5 shows a detail of a fastening element of the tensioning device,
Figure 6 schematically shows in cross section a preferred embodiment of a release arrangement of the tensioning device along line C-C indicated in Figure 1,
Figure 7 schematically shows in longitudinal section a tensioning device with an arrangement arranged thereto for operating a fastening element included in the tensioning device,
Figure 8 schematically shows in cross section an arrangement according to Figure 7 along line A-A indicated in Figure 7,
Figure 9 shows a front view of an end of a support element opposite to the bottom of the cargo space seen from the load space,
Figure 10 schematically shows in cross section a part of the arrangement depicted in Figure 9, and
Figure 11 shows an alternative embodiment of an arrangement included in the present tensioning device.

### DESCRIPTION OF A PREFERRED EMBODIMENT

A preferred embodiment of the tensioning device is described in the following with reference to the above figures. The solution thus includes the structural parts shown in the figures, each being indicated with respective reference numerals. The reference numerals correspond in the specification below to the indicated reference numerals.

A tensioning device according to the present embodiment is aimed to be arranged into a cargo space for instance in connection with a carrier known per se, which are not specifically indicated in the accompanying figures. Thus, the tensioning device comprises the following main parts. A flexible tensioning means 1 usually in the form of a fibre rope or a steel wire rope, a winch drum 2 for collecting the flexible tensioning means, a drive means 3 for rotating the winch drum and a locking device 4 for fastening the tensioning means in relation to the cargo space at the end thereof opposite to the winch drum.

The flexible tensioning means 1 is briefly referred to in the following as *"load rope".* This term is nevertheless not aimed to restrict the formulation thereof to a rope of a specific type. The load rope is fastened at one end thereof to a winch drum 2, on which the load rope is arranged to be collected. The winch drum is preferably placed below a carrier base included in the cargo space, whereby the load rope 1 is arranged to project on the side of a load 5 arranged on the carrier base. The winch drum is allowed to rotate by means of the drive means 3 comprising an operating element 6 such as a piston cylinder known per se operated by an appropriate pressure medium. Such a piston cylinder includes for instance a hydraulic or pneumatic cylinder that utilizes a pressure medium system included in the carrier.

An appropriate amount of load rope may be released from the winch drum and thereafter arranged right across the load, which is placed on the carrier base in the cargo space. In order to extend the load rope over the load, one end of the load rope is arranged to be fasten to the locking device 4 substantially stationary against the winch drum. The winch drum and the locking device can preferably be surrounded by a joint cover 7 in order to make it easier to shift tensioning device and in order to avoid disadvantageous dirtying.

The cover 7 preferably includes a particular hollow girder constructed for this purpose. If the present tensioning device is used for instance for timber transportation, the cover can also be arranged to represent a part of the timber girder known per se, for instance. The cover may also be represented by the frame structures of for instance the cargo space or the carrier or a fixed part of for example the floor structure of the cargo space. Since the external dimensions of the tensioning device are relatively small, it is also possible to arrange the tensioning device on the sidewall or timber bank of the carrier, where it is easily accessible and well visible.

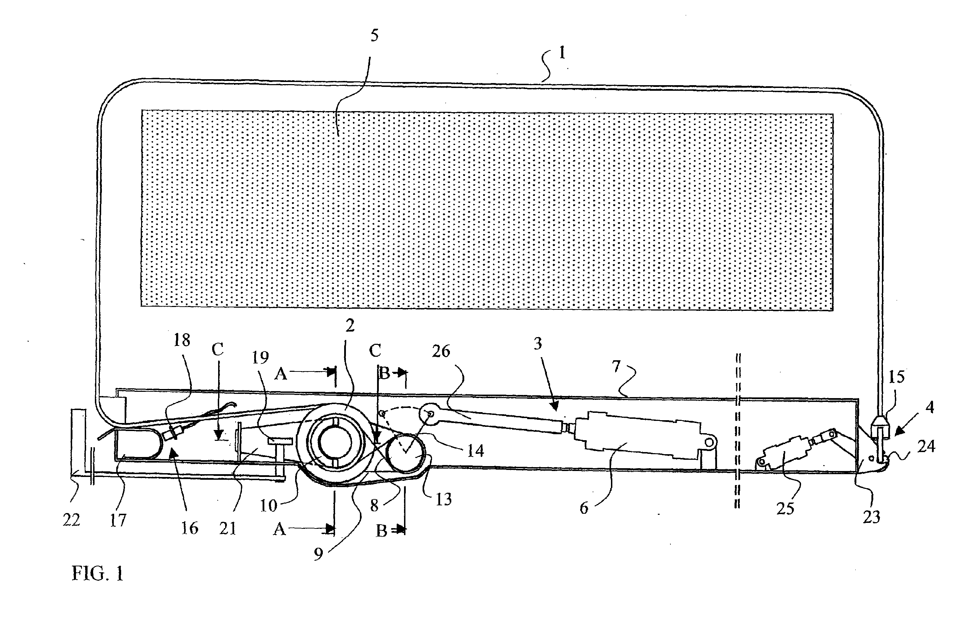

The drive means 3, which in accordance with Figure 1 is arranged to rotate the winch drum 2, comprises at least one operating element 6. The aim of such an operating element is to maintain a working motion in two substantially opposite directions. Hereby the operating element comprises in the first embodiment thereof two piston cylinders arranged to operate in substantially opposite directions. However, the preferred embodiment of the operating element, which is also exemplified in the accompanying figures, comprises a double-acting piston cylinder.

The operating element is arranged to operate at least two flexible control means 8 and 9 arranged in the winch drum 2. The control means are preferably arranged in ratchet wheels 10 and 11 divided into two parts. The shape of said parts is substantially reversed and the parts are arranged to project from the winch drum on the opposite sides thereof. The ratchet wheels comprise halves 10a, 10b and 11a, 11b provided with cogged surfaces positioned against one another. Such cogged surfaces are arranged to co-operate with one another, but only when rotating in a direction relative to a central axis 12 included in the winch drum, whereby the direction of rotation coincides at both ends of the winch drum. The control means driven by the operating element thus allow the wind drum to continuously rotate in the same direction around the central axis thereof.

In order to operate the control means 8 and 9, the operating element 6 is preferably connected to an articulated intermediate cradle 13. This comprises an axis of rotation that rests on a vertical cross section plane substantially parallel to the vertical cross section plane of the central axis 12. Preferably, such axes are substantially parallel. The operating element co-operates with the intermediate cradle by means of at least one joint lever 14. The joint lever is arranged on the opposite sides thereof partly substantially stiffly to the intermediate cradle and partly rotatably to the operating element.

The control means 8 and 9 are connected to the intermediate cradle substantially in frictionless manners, for example to the parallel chain wheels or drive pulleys included therein. Hence, the control means comprise for instance roller chains, cogged belts or cone belts. According to Figure 1, one of the control means, in this case control means 8, is arranged to extend from one circular path at the intermediate cradle to a circular path around one ratchet wheel half 10a of the winch drum. While extending from the intermediate cradle to the ratchet wheel, the control means occupies an eight-shaped path, which means that the intermediate cradle and the ratchet wheel 10a move in opposite rotation directions. The second control means 9 is correspondingly arranged to extend from a circular path at the intermediate cradle to a circular path around the opposite ratchet wheel half 11a of the winch drum. While extending from the intermediate cradle to the ratchet wheel, the control means occupies a zero-shaped path, which results in that the intermediate cradle and the ratchet wheel 10a move in a coinciding rotation direction.

While the operating element 6 aims to achieve an alternating rotational motion in the intermediate cradle 13, the intermediate cradle aims to mediate the pulsating motion of the operating element to the control means 8 and 9 and simultaneously to provide them with a regular even path of motion. Changing the dimensions of the joint lever 14 may affect the length of stroke and capacity of the operating element.

In the most preferable embodiment, the control means 8 and 9 comprise chains. These are arranged at a first end thereof as chain wheel-shaped ratchet wheel halves 10a and 11a. At the second end thereof, the control means are arranged to the intermediate cradle that correspondingly comprises chain wheels for receiving the chains.

In order avoid wear of the crosswise placed control means 8 and/or 9, it is naturally possible to form the control means as cut ropes or chains substantially stiffly fastened on the opposite sides thereof to respective ratchet wheels and the side of the intermediate cradle.

Arranging the control means 8 and 9 at the end opposite to the intermediate cradle 13 on the outer periphery of each ratchet wheel 10 and 11, the ratchet wheel is allowed to rotate around the central axis 12 of the winch drum during each blow, respectively draw, of the operating element 6. In order to maintain the winch drum constantly in rotation, the cogged surfaces of the ratchet wheels turned against one another comprise such a structure that during the rotation around the common central axis in a first direction, both cogged surfaces take hold of one another, whereas during the rotation in a second - opposite - direction the cogged wheels are allowed to rotate in relation to one another. Since the ratchet wheels arranged on the opposite sides of the winch drum are also reversed regarding one another, thus resulting in that the cogged surfaces of the ratchet wheels on the opposite sides are alternately arranged to rotate towards one another. The first ratchet wheel halves when they are subjected to blow from the operating element - in the embodiment according to Figure 1 the ratchet wheel parts 11 a and 11b - and the second ratchet wheel halves when they are subjected to draw - according to Figure 1 the ratchet wheel parts 10a and 10b. This means that a driving power is alternately applied to the winch drum, thus resulting in a continuous rotation thereof.

The winch drum 2 is arranged to receive the load rope 1 when it by means of the operating element and the ratchet wheels 10 and 11 affected thereby is allowed to rotate around the common central axis 12. If the load rope is fastened on one side thereof at the locking device 4, the load rope is extended over the load 5 in accordance with this process. The drive means 3 simultaneously continues to load the load rope constantly and the slackness eventually created during transportation is rapidly counteracted by collecting the slack load rope around the winch drum. If on the other hand the load rope has been released during unloading, the winch drum rapidly collects the entire the load rope without requiring any assistance from the part of the driver, for instance. The load rope is then rolled up around the winch drum until the fastening element 15 included at the outermost end of the load rope indicates in co-operation with an interruption mechanism 16 comprising for instance a spring steel 17 and a level indicator 18 that the entire load rope is collected. The operation of the drive means is thus interrupted and a continuous rest tension is directed towards the load rope, avoiding it from being released from the winch drum.

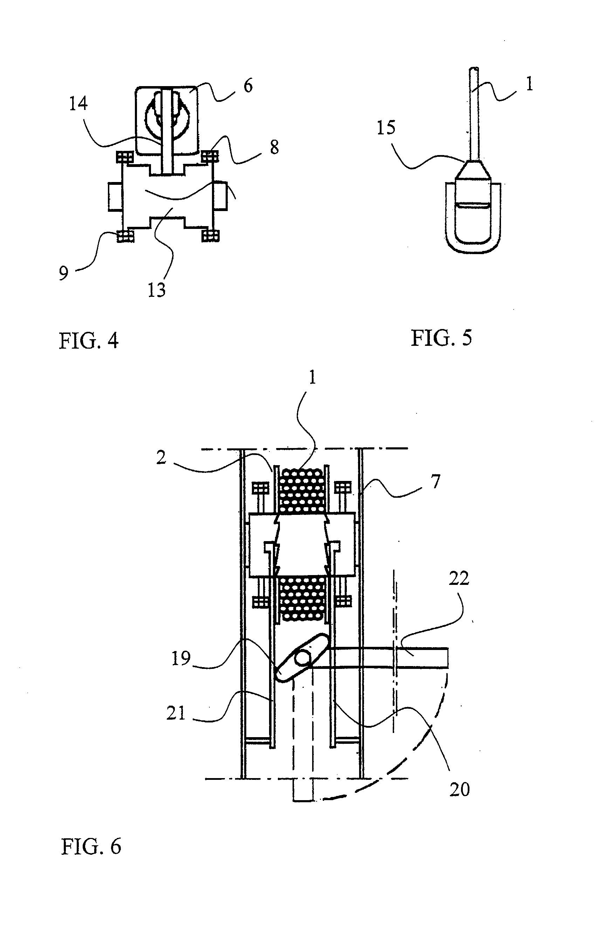

In order to release the load rope 1 again from the winch drum 2, both ratchet wheels 10 and 11 of the winch drum are released. Hereby, the outer halves 10a and 11 a of the ratchet wheels fastened to the control means 8 and 9 are preferably pressed from the inner halves 10b and 11 b fastened to the winch drum, for example using a mechanical wedge, or as in the present preferable structure using a rotatable release block 19. Such a release block is arranged to co-operate according to Figure 6 with reaction levers 20 and 21, stationarily fastened at one end thereof in relation to the winch drum and affecting the outer ratchet wheel halves 10a and 11 a at the other end thereof. Allowing these reaction levers to be brought apart from one another, the cogged surfaces of the ratchet wheels are pressed at the same time in a direction substantially along the central axis 12 of the winch drum or along the possible extension thereof, in order to be released from one another and to allow the winch drum to rotate freely. When the winch drum is thus released, it is possible to pull out the load rope from the drum and to extend it over a new load arranged on the carrier base. The reaction levers are pressed apart by rotating the release block around an axis on a plane substantially perpendicularly placed towards the central axis 12 of the winch drum. Consequently, the rotational motion is for instance carried out by moving a lever 22 connected to the release block. It is, however, preferable to operate the release block using a pressure medium, preferably the same pressure air used for operating the operating element.

The tensioning device according to the invention thus functions as will be described in the following.

The tensioning device is preferably arranged in a direction substantially perpendicularly towards the cargo space and the length central axis of the carrier base thereof. Hereby, the load rope 1 is arranged to project from the tensioning device on one long side of the carrier base, whereby the locking device 4 of the tensioning device is to be found on the opposite long side of the carrier base. It should, however, be observed that the tensioning device can also be placed in a different way depending on what kind of carrier base it is arranged to and what kind of load it should secure to the base thereof.

When securing the load the flexible tensioning means 1 rolled on the winch drum 2 - continuously referred to as the load rope - is thus drawn outside a cover 7 that preferably surrounds the winch drum and the drive means 3 arranged thereto, after having released the winch drum by pressing the ratchet wheel halves 10 a, 10b and 11 a, 11b from one another using the release block 19 affecting the outer ratchet wheel halves. The load rope is then applied right across the load 5 arranged on the carrier base, and thereafter the load rope is fastened from the outer end thereof to the locking device 4, thus placed on the opposite side of the carrier base. The fastening element 15 placed at one of the outer ends of the load rope is then blocked in the locking device using for instance a pawl 24 allowed to rotate towards a hook 23, operated by a control element 25. Such a control element is preferably a spring means and/or a cylinder means, or a magnet.

When the load rope if fastened from both sides thereof on the opposite sides of the load the drive means is switched on. The drive means comprises a double-acting operating element 6, which both blows and draws while the direction is automatically reversed in a way known per se by interrupters built in said means or interrupters co-operating with a bolt 26 included in the means.

The operating element 6 allows the intermediate cradle 13 to rotate about a rotation axis for operating the two control means 8 and 9. Such control means are in turn arranged to rotate a ratchet wheel 10 and 11 each, for instance a quarter of a lap at a time, thus the first control means 8 moving the ratchet wheel 10 as well as the winch drum 2 connected thereto a quarter of a lap clockwise. At the same time, the control means 9 arranged to the reversed ratchet wheel 11 is arranged to operate the opposite ratchet wheel 11 in the opposite direction, thus allowing the halves of the ratchet wheels arranged thereto to slide towards one another a quarter of a lap clockwise. In the following phase, the operating element changes the operational direction thereof. Now the ratchet wheel halves applied to the control means 9 once again take hold of one another and again draw the winch drum a quarter of a lap clockwise while the control means 8 is in turn arranged to rotate the ratchet wheel halves connected thereto also a quarter of a lap clockwise in relation to one another. The outer ratchet wheel halves 10a and 11 a thus rotate back and forth approximately a quarter of a lap while they allow the inner ratchet wheel halves 1 0b and 11 b to continuously rotate about the central axis 12 thereof.

The winch drum 2 continues to rotate until the load rope 1 is extended over the load. Since the drive means 3 comprise a continuous pressure the operation thereof is, however, not discontinued. Instead, immediately as the load rope slackens, for example owing to the movement of the load 5, the load rope is rapidly secured.

When the load 5 is to be unloaded, the fastening element 15 of the load rope is released from the locking device 4. This can preferably be carried out using a remote-controlled mechanism that is for instance driven with a pressure medium and is arranged to affect the pawl 24 or a similar locking means lying close to the fastening element. The pawl is forced to release the fastening element at the same time as the tensioning device temporarily slackens the load rope in order to prevent the load rope from being worn too abruptly from the hook 23. After this, once again the continuously operating drive means pulls up the released load rope on the winch drum 2. When the outer end of the load rope and the fastening element placed therein reach a receiving means included in the tensioning device, the fastening element preferably co-operates with an interruption mechanism 16 that interrupts the pressure flow to the operating element 6. However, the operating element may continuously provide a base pressure that may be adjusted by means of the interruption mechanism. Such a base pressure determines the rest tension that the load rope is provided with when placed in the winch drum.

Both the driving means 3 and the locking device 4 are preferably arranged to utilize a piston cylinder in the form of a pneumatic cylinder. Such a pneumatic cylinder is advantageously arranged to function together with a pneumatic system included in connection with the cargo space.

In order to be able during loading to reach the end of the load rope 1 provided with fastening element more easily, a tensioning device according to the Figures is preferably provided with a specific support element 27 arranged substantially at the edge of the carrier base. Such a support element extends from the carrier base in a substantially vertical direction above the base. When the load rope is collected on the winch drum 2, the end of the load rope provided with the fastening element is arranged to a receiving member 28 included in the support element substantially at an end 29 placed opposite to the carrier base. Carefully manoeuvred to the receiving member the end of the load rope provided with the fastening element is arranged to occupy a substantially upright position relative to the support element. Arranged in this manner to the support element, it is easy to take hold of the load rope for instance with a loading crane included in the carrier, without the driver of the crane having to take hold of the load rope 1 with his hands.

In order to move the load rope 1 to the receiving member 28, the present arrangement comprises a flexible control loop 30 provided with a first end 31 arranged in or into the support element 27. A second end 32 of the control loop is preferably placed outside the support element, where it extends to surround the load rope. Since at least the second end of the control loop is movable relative to the support element, the control loop is brought to follow the load rope when it is extended over the load. Thus, the control loop very easily slides in relation to the support element, so that it will not prevent the movements of the load rope in any way while being placed over the load.

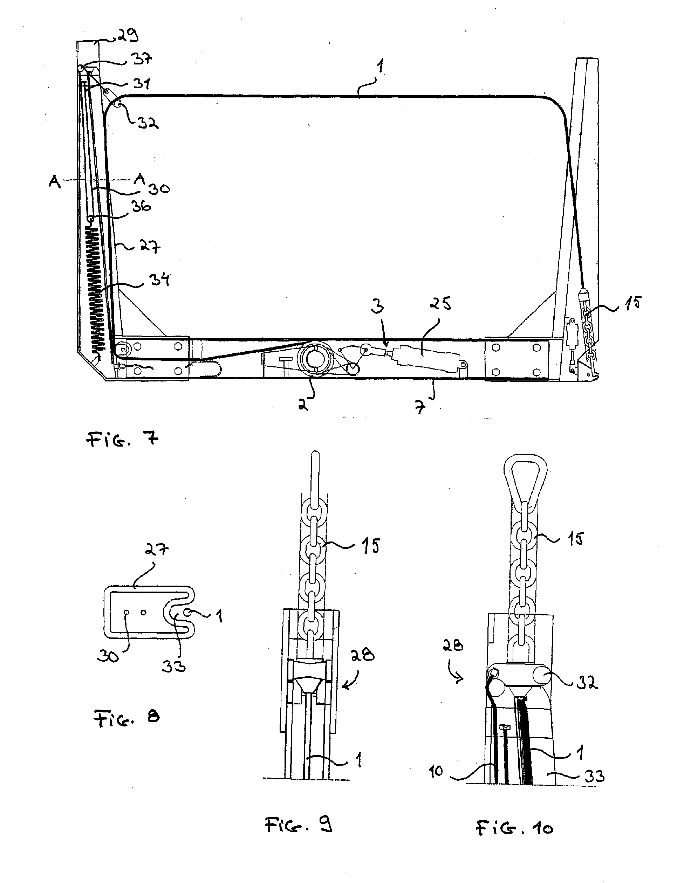

When the load is to be unloaded, the load rope is released at the locking device 4 and is collected to the winch drum 2. Simultaneously as the load rope is released, a reversible movement is also arranged to be created at the control loop. During such a movement, the load rope is moved to occupy a position at the support element, in which case the load rope preferably continues the path thereof towards the winch drum through a channel 33 provided in the support element. Such a channel is exemplified in the accompanying Figure 8. When the load rope has occupied its place on the channel, the load rope is well protected from external strains when loading the carrier. This means that the load rope obtains an extended working life. The channel advantageously extends substantially over the entire length of the support element 27 and at the same time remains open towards the cargo space. Such a design allows the load rope to be shaped over any load placed in the cargo space, irrespective of the form or height thereof.

The channel 33 comprises according to Figure 8 a recess in the support element 27. It is naturally possible to implement the structure of the channel in various ways. A simple implementation is achieved for instance by making the support element of a U profile arranged to receive both the load rope 1 and the control loop 30.

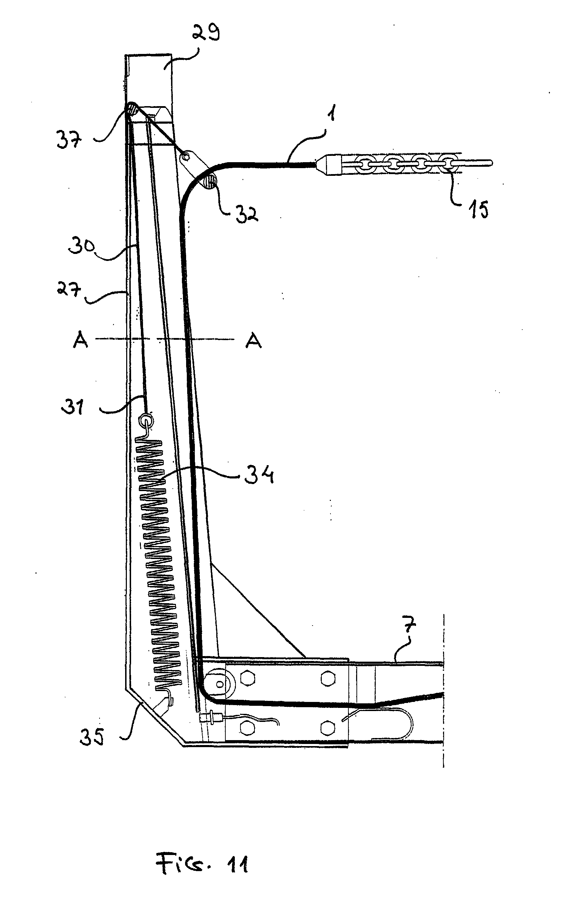

As the load rope 1 has been collected to the maximum, the control loop 30 will be reverted to the basic position thereof at the support element at the end 29 thereof placed substantially opposite to the carrier base. Resting on the receiving member 28 of the support element, the control loop forces the load rope and the fastening element 15 included therein to be pressed towards the receiving member, whereby the fastening element occupies a substantially upright position in relation to the support element 27 in accordance with Figures 9 and 10.

In addition to the receiving member 28 and the channel 33 for the load rope 1, a preferred embodiment of the support element 27 comprises a spring means 34. Such a spring means is arranged to load the control loop 30 in order to maintain the reversible movement of the control loop in relation to the support element. In accordance with the embodiment shown in Figure 7 the spring means comprise a coil spring fastened to the end 35 of the support element arranged towards the carrier base. The opposite end of the spring means is fastened to a pulley 36 through which the control loop is arranged to move. According to the Figure, the control loop is at the first end 31 thereof fastened to the support element 27 substantially at the end 29 thereof opposite to the carrier base. The control loop thereafter extends to the pulley 36 included in the spring means 34 in order to be positioned towards the end 39 of the support element opposite to the carrier base, and to extend to the load rope outside the support element through a suspension arrangement 37 included in the carrier base.

When loading the control loop 30, the outer end 32 thereof is thus drawn towards the carrier base, whereby the spring means 34 extends towards the end 29 of the support element opposite to the bottom of the cargo space. When the load is unloaded and the load rope is once again released, the spring means is again pulled in order to collect the outer end of the control loop towards the receiving means 28.

The movements of the control loop 30 towards the receiving member 38 may certainly also be implemented using a structure in which the outer end 31 of the control loop opposite to the load rope 1 is arranged directly to the spring means 34 in accordance with Figure 11, whereby a shift is provided in each part of the control loop that continuously show a shift of the same distance. A similar shift may also take place if the control loop is arranged to the suspension arrangement 37 in such a manner that the both ends thereof suspend freely. Thus, the outer end 32 is as described above arranged to surround the tensioning arrangement, while the inner end 11 is provided with a weight or the like in order to affect the movements of the control loop in the fastening element.

The above specification and the Figures associated therewith are merely intended to illustrate the present solution as a structure of a tensioning device. The solution is therefore not restricted to the above embodiment or to the embodiment disclosed in the accompanying claims, but a plurality of variations or alternative embodiments are also possible within the scope of the idea described in the accompanying claims.

It is therefore possible to utilize another type of release means known per se instead of the ratchet wheel described above, for instance in the form of a locking structure allowing a free rotation in relation to an axis in one operating direction of the structure, but which rests rigidly against the axis in the second operating direction of the structure, a so-called freewheel coupling. It is also possible to utilize what is known as a magnetic coupling to adjust the locking function of the winch drum.

## Claims

1. A tensioning device to be arranged into a cargo space, the tensioning device comprising a cover (7) with a flexible tensioning means (1) included therein arranged in a winch drum (2) and arranged to be projected from the cover on one side of a load (5) arranged into the cargo space, whereby the tensioning means is arranged to substantially surround the load and to be fastened to a locking device (4) on one side of the cargo space opposite the one that projects from the cover, whereby the tensioning means is arranged to be secured towards the load using a drive means (3) arranged to rotate the wind drum about a central axis (12) thereof, **characterized in that**
the drive means (3) comprise at least an operating element (6) arranged to maintain a working motion in two substantially opposite directions,
the operating element is arranged to operate at least two flexible control means (8, 9) arranged in the winch drum (2),
the control means are arranged in reversed release means (10, 11) included in the winch drum substantially on the opposite sides thereof, whereby
respective release means is arranged to co-operate with the winch drum only when rotating in a direction relative to the central axis (12) of the winch drum in such a manner that the direction of rotation coincides with both sides of the winch drum, whereby
the control means driven by the operating element are arranged to allow the winch drum to continuously rotate in the same direction about the central axis thereof.

2. A tensioning device as claimed in claim 1, **characterized in that** the release means comprise reversed two-piece ratchet wheels (10, 11) in the winch drum substantially on the opposite sides thereof, whereby
both ratchet wheels shown comprise two halves (10a, 10b and 11a, 11 b) provided with cogged surfaces orientated against one another arranged to co-operate only when rotating in a direction relative to the central axis (12) of the winch drum, in such a manner that the direction of rotation coincides with both sides of the winch drum.

3. A tensioning device as claimed in claim 1 or 2, characterzed in that the operating element (6) comprises two piston cylinders arranged to operate in substantially opposite directions.

4. A tensioning device as claimed in claim 1 or 2, characterzed in that the operating element (6) comprises a double-acting piston cylinder.

5. A tensioning device as claimed in any one of the preceding claims, **characterized in that** the operating element (6) is arranged to operate a jointed intermediate cradle (13), which comprises a rotating central axis substantially parallel with the central axis (12) of the winch drum (2), whereby the intermediate cradle is arranged to be driven through at least one joint lever (14) included therein.

6. A tensioning device as claimed in any one of the preceding claims, **characterized in that** the cogged surfaces of the ratchet wheel halves (10a, 10b and 11 a, 11 b) orientated against one another are arranged to be released substantially simultaneously from one another and thus to release the winch drum (2) to freely rotate about the central axis (12) thereof and to release the flexible tensioning means (1) collected therein.

7. A tensioning device as claimed in claim 6, **characterized in that** the cogged surfaces of the ratchet wheel halves (10a, 10b and 11a, 11 b) orientated against one another are arranged to be released substantially simultaneously from one another with a release block (19) arranged to move the outer ratchet wheel half (10a, 11a) in a direction substantially along the central axis (12) of the winch drum (2) or the possible extension thereof.

8. A tensioning device as claimed in any one of the preceding claims, **characterized in that** the flexible tensioning means (1) at the end thereof opposite to the winch drum (2) comprises a fastening element (15) arranged to be coupled to the locking device (4) when the flexible tensioning means surrounds the load (1).

9. A tensioning device as claimed in claim 8, **characterized in that** the locking device (4) comprises a hook (23) for receiving the fastening element (15), and the hook comprises a pawl (24) rotatably arranged thereto for closing or opening the hook operated by a control element (25).

10. A tensioning device as claimed in claim 9, **characterized in that** the control element (25) comprises a remote control for opening the pawl (24).

11. A tensioning device as claimed in any one of the preceding claims, **characterized in that** the cover (7) arranged to substantially surround the winch drum (2), the drive means (3) and the locking device (4) comprise a specific hollow girder constructed for the purpose.

12. A tensioning device as claimed in claim 11, **characterized in that** the cover (7) comprises a timber girder.

13. A tensioning device as claimed in any one of the preceding claims, **characterized in that** the winch drum (2) comprises a continuous tensioning function.

14. A tensioning device as claimed in any one of claims 3 to 13, **characterized in that** the piston cylinder (6) is a pneumatic cylinder.

15. A tensioning device as claimed in any one of claims 3 to 13, **characterized in that** the piston cylinder (6) is a hydraulic cylinder.

16. A tensioning device as claimed in claim 14 or 15, **characterized in that** the piston cylinder (6) is arranged to function together with a pressure medium system included in the cargo space.

17. A tensioning device as claimed in any one of the preceding claims, **characterized in that**
a support element (27) is arranged substantially at the edge of the cargo base, the support element extending from the cargo base in a substantially vertical direction above the same, whereby
a flexible control loop (30) comprising a first end (31) and a second end (32) extends from the first end thereof arranged in the support element to surround the tensioning means (1) at the second end thereof,
the control loop is at the same time reversibly movable in relation to the support element (27).

18. A tensioning device as claimed in claim 17, **characterized in that** the control loop (30 at the first end (31) thereof is fastened to the support element (27), whereby the support element comprise a spring means (34) arranged to load the control loop to maintain the reversible movement thereof in relation to the support element.

19. A tensioning device as claimed in claim 18, **characterized in that** the control loop (30) is arranged in the support element (27) through the spring means (34).

20. A tensioning device as claimed in claim 17, **characterized in that** the support element (27) comprises a suspension device (37) for receiving the control loop (30) and for allowing a shift to be carried out in each part thereof that continuously shows a shift of the same distance.

21. A tensioning device as claimed in any one of claims 17 to 20, **characterized in that** the support element (27) substantially at the end opposite to the bottom of the cargo space comprises a receiving member (28) that in co-operation with the control loop (30) is arranged to control the outer end (32) of the tensioning means (1) and the fastening element (15) therein and thus to arrange the same in a substantially upright position in relation to the support element.
